# EUROPÄISCHE PATENTSCHRIFT

(11) **EP 3 074 266 B1**
(45) Veröffentlichungstag und Bekanntmachung des Hinweises auf die Patenterteilung: **21.11.2018**
(21) Anmeldenummer: 14805882.9
(22) Anmeldetag: 28.11.2014
(51) Int. Cl.: B60K 35/00, G02F 1/1335, G02F 1/1333

(54) **ANZEIGEVORRICHTUNG**
DISPLAY DEVICE
DISPOSITIF D'AFFICHAGE

(30) Priorität: 29.11.2013 DE 102013017973
(43) Veröffentlichungstag der Anmeldung: 05.10.2016
(73) Patentinhaber: Visteon Global Technologies, Inc., Van Buren Township, Michigan 48111 (US)
(72) Erfinder: TUZSUZOV, Jordan, 75045 Walzbachtal (DE)
(74) Vertreter: Wolff, Felix
(86) Internationale Anmeldenummer: PCT/EP2014/075994
(87) Internationale Veröffentlichungsnummer: WO 2015/079036

(56) Entgegenhaltungen:
- WO-A1-2010/117114
- DE-A1- 10 220 335
- JP-A- 2010 271 552
- US-A1- 2011 134 378

## Beschreibung

Die vorliegende Erfindung betrifft eine Anzeigevorrichtung mit einem ersten Anzeigesegment und einem zweiten Anzeigesegment, wobei das erste Anzeigesegment ein wenigstens teilweise transparentes Abdeckelement mit einer Haupterstreckungsebene und einer Vorderseite und einer Rückseite umfasst und wobei das zweite Anzeigesegment wenigstens eine Anzeigeeinrichtung umfasst, wobei die Anzeigeeinrichtung auf der Rückseite des Abdeckelements angeordnet ist und wobei das Abdeckelement im Bereich der Anzeigeeinrichtung eine höhere Transparenz aufweist als in wenigstens einem anderen Bereich.

Derartige Anzeigevorrichtungen sind aus dem Stand der Technik bekannt, um einen sogenannten Schwarztafel-Effekt (Black-Panel-Effekt) zu erzielen. Dabei sollen Anzeigeelemente bzw. Anzeigeeinrichtungen lediglich in ihrem eingeschalteten Zustand sichtbar sein. Dadurch, dass die Anzeigeelemente bzw. -einrichtungen im ausgeschalteten Zustand nicht sichtbar sind, erscheint die Anzeigevorrichtung als eine glatte, schwarze Fläche, wodurch der wertige Eindruck der Anzeigevorrichtung gesteigert wird. Oft weisen derartige Anzeigevorrichtungen digitale Anzeigeeinrichtungen auf, die in ihrem ausgeschalteten Zustand bereits kaum sichtbar sind.

Um eine ausreichende Helligkeit und damit eine hinreichende Sichtbarkeit für einen Benutzer zu gewährleisten, müssen die Anzeigeeinrichtungen eine hohe Helligkeit aufweisen, wodurch teurere Komponenten erforderlich sind, die zudem einen höheren Energieverbrauch aufweisen. Um die Kosten und den Energieverbrauch einer solchen Anzeigevorrichtung zu senken, ist es bekannt, das Abdeckelement im Bereich der Anzeigeeinrichtung mit einer höheren Transparenz zu versehen, so dass bei einem gleichbleibenden Schwarztafel-Effekt eine weniger helle Anzeigeeinrichtung einsetzbar ist.

Dabei ergibt sich das Problem, dass durch den Übergang zwischen hoher und niedriger Transparenz beispielsweise Reflexionen auftreten und dadurch die Übergänge für einen Benutzer sichtbar sind. Zudem ist die Herstellung einer solchen Anzeigevorrichtung aufwendig.

US2011/134378 offenbart die Merkmale der Präambel des unabhängigen Anspruches.

Es ist daher die Aufgabe der vorliegenden Erfindung, eine Anzeigevorrichtung mit einem Schwarztafel-Effekt bereitzustellen, die die Nachteile des Standes der Technik nicht aufweist.

Gelöst wird die Aufgabe mit einer Anzeigevorrichtung gemäß des unabhängigen Anspruches.

Die Erfindung betrifft eine Anzeigevorrichtung mit einem ersten Anzeigesegment und einem zweiten Anzeigesegment, wobei das erste Anzeigesegment ein wenigstens teilweise transparentes Abdeckelement mit einer Haupterstreckungsebene und einer Vorderseite und einer Rückseite umfasst und wobei das zweite Anzeigesegment wenigstens eine Anzeigeeinrichtung umfasst, wobei die Anzeigeeinrichtung auf der Rückseite des Abdeckelements angeordnet ist und wobei das Abdeckelement im Bereich der Anzeigeeinrichtung eine höhere Transparenz aufweist als in wenigstens einem anderen Bereich. Das Abdeckelement ist vorzugsweise aus Glas gefertigt, besonders bevorzugt aus Polymethylmethacrylat (PMMA), ganz besonders bevorzugt aus Polycarbonat (PC). Das Abdeckelement ist vorzugsweise durch Spritzgießen herstellbar. Das erste und zweite Anzeigesegment sind vorzugsweise form-, kraft- und/oder stoffschlüssig miteinander verbunden. Dadurch, dass ein Übergangsbereich vorgesehen ist, ist es vorteilhafterweise möglich, dass der Übergang zwischen den Bereichen hoher und niedriger Transparenz für einen Benutzer nicht, oder zumindest kaum sichtbar ist und so ein homogener Schwarztafel-Effekt erzielt wird.

Vorzugsweise weist das Abdeckelement in dem Bereich mit hoher Transparenz eine niedrigere Materialdicke auf als in dem Bereich mit niedriger Transparenz.

Vorzugsweise beträgt die Transparenz im Bereich der Anzeigeeinrichtung 40 % bis 60 %, insbesondere 50 %.

Vorzugsweise beträgt die Transparenz in dem wenigstens einen anderen Bereich 10 % bis 40 %, besonders bevorzugt 20 % bis 30 %, insbesondere 25 %.

Vorzugsweise beträgt die Materialdicke in dem Bereich mit niedriger Transparenz 0,5 mm bis 1,0 mm, besonders bevorzugt 0,7 mm bis 0,8 mm, insbesondere 0,75 mm.

Vorzugsweise beträgt die Materialdicke in dem Bereich mit niedriger Transparenz 1 mm bis 2 mm, besonders bevorzugt 1,3 mm bis 1,7 mm, insbesondere 1,5 mm.

Vorzugsweise ist die Transparenz und/oder die Materialdicke in dem Übergangsbereich konstant oder variabel veränderlich. Darunter ist insbesondere zu verstehen, dass der Übergang von dem Übergangsbereich zu dem Bereich mit niedriger Transparenz und/oder zu dem Bereich mit hoher Transparenz scharf oder kontinuierlich ausgebildet ist, also beispielsweise Ecken aufweist oder abgerundet gestaltet ist, so dass ein kontinuierlicher Übergang erfolgt bzw. ein linearer Übergang. Der Fachmann versteht, dass die Erstreckung des Übergangsbereichs parallel zu der Haupterstreckungsebene des Abdeckelements üblicherweise im Fall eines linearen Übergangs kürzer realisierbar ist als im Fall eines kontinuierlichen Übergangs.

Besonders bevorzugt ist der Übergangsbereich im Fall des linearen bzw. konstant veränderlichen Übergangs vollständig über der Anzeigeeinrichtung vorgesehen. Ganz besonders bevorzugt ist der Übergangsbereich im Fall des kontinuierlichen bzw. kontinuierlich veränderlichen Übergangs teilweise über der Anzeigevorrichtung vorgesehen.

Vorzugsweise weist das zweite Anzeigesegment wenigstens ein Anzeigeelement auf, insbesondere Symbole und/oder Zeigerinstrumente. Besonders bevorzugt ist dieses Anzeigeelement in dem Bereich niedriger Transparenz vorgesehen. Dadurch ist es vorteilhafterweise möglich, dass beispielsweise ein Warnsymbol in unbeleuchtetem Zustand für einen Benutzer unsichtbar ist. Ganz besonders weist das zweite Anzeigesegment eine Vielzahl von unterschiedlichen Anzeigeelementen auf. Noch mehr bevorzugt sind die Anzeigeelemente selektiv beleuchtbar vorgesehen.

Vorzugsweise weist das erste Anzeigesegment auf der Vorderseite des Abdeckelements wenigstens teilweise eine Antireflexionsbeschichtung auf. Besonders bevorzugt ist auf der Vorderseite des Abdeckelements eine Antireflexionsfolie angeordnet. Dadurch ist es vorteilhafterweise möglich, dass die Ablesbarkeit der Anzeigeeinrichtung und/oder der Anzeigeelemente zu erhöhen.

Vorzugsweise weist das erste und/oder zweite Anzeigesegment auf der Rückseite des Abdeckelements wenigstens in dem Übergangsbereich eine Antireflexionsbeschichtung auf. Ganz besonders bevorzugt ist auf der Rückseite des Abdeckelements in dem Übergangsbereich eine Antireflexionsbeschichtung, insbesondere eine Antireflexionsfolie, vorgesehen.

Vorzugsweise ist die Anzeigeeinrichtung ein Flüssigkristalldisplay. Besonders bevorzugt weist die Anzeigeeinrichtung im eingeschalteten Zustand eine derartige Leuchtdichte auf, dass auf der Vorderseite des Abdeckelements die Leuchtdichte wenigstens 400 cd/m² oder wenigstens 450 cd/m² beträgt. Ganz besonders bevorzugt weist die Anzeigeeinrichtung eine Leuchtdichte von wenigstens 700 cd/m², 800 cd/m², 900 cd/m², 1000 cd/m² oder bis zu 1600 cd/m² auf.

Ein weiterer Gegenstand der vorliegenden Erfindung ist die Verwendung einer erfindungsgemäßen Anzeigevorrichtung in einem Kombiinstrument eines Kraftfahrzeugs.

Die bezüglich diesem Gegenstand gemachten Offenbarungen sollen auch für alle anderen erfindungsgemäßen Gegenstände gelten und umgekehrt.

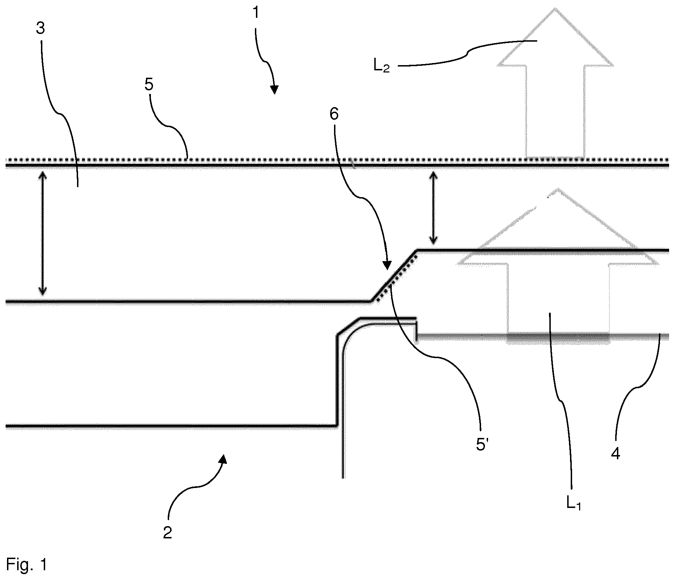

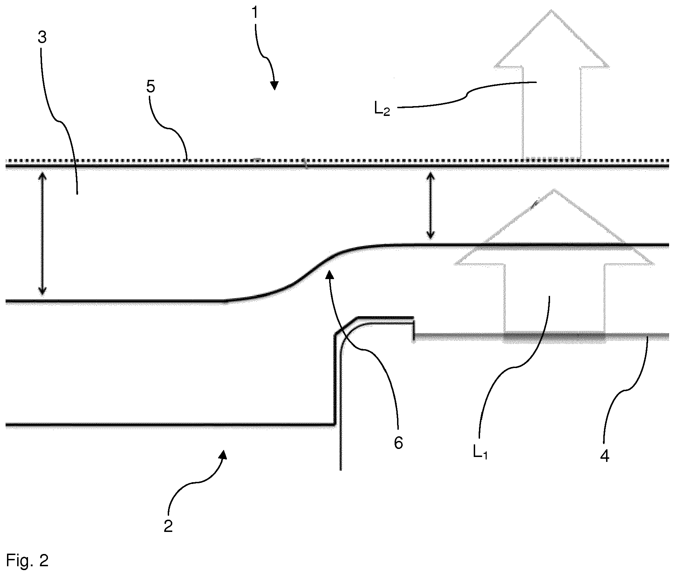

Im Folgenden wird die Erfindung anhand der Figuren 1 und 2 erläutert. Diese Erläuterungen sind lediglich beispielhaft und schränken den allgemeinen Erfindungsgedanken nicht ein.
- **Figur 1**: zeigt eine beispielhafte Ausführungsform der erfindungsgemäßen Anzeigevorrichtung.
- **Figur 2**: zeigt eine weitere Ausführungsform der erfindungsgemäßen Anzeigevorrichtung.

In **Figur 1** ist eine beispielhafte Ausführungsform der erfindungsgemäßen Anzeigevorrichtung dargestellt. Die Anzeigevorrichtung ist beispielsweise in einem Kombiinstrument eines Kraftfahrzeugs angeordnet. Die Anzeigevorrichtung weist ein erstes Anzeigesegment 1 und ein zweites Anzeigesegment 2 auf. Das erste Anzeigesegment 1 umfasst ein Abdeckelement 3 mit einer Vorderseite und einer Rückseite. Das Abdeckelement 3 ist hier beispielsweise im Spritzgießverfahren oder Formpressverfahren oder einem beliebigen anderen, dem Fachmann bekannten Formherstellungsverfahren aus Polymethylmethacrylat (PMMA) hergestellt. Alternativ oder zusätzlich besteht das Abdeckelement 3 aus Glas und/oder Polycarbonat (PC).

Das zweite Anzeigesegment 2 umfasst wenigstens eine Anzeigeeinrichtung 4, hier eine Flüssigkristallanzeige 4. Weiterhin kann das zweite Anzeigesegment 2 Anzeigeelemente wie Zeigerinstrumente und/oder Warn- bzw. Hinweissymbole umfassen.

Das Abdeckelement 3 weist hier im Bereich der Flüssigkristallanzeige 4 eine Materialdicke von 0,75 mm und eine Transparenz von ca. 50 % auf. In dem Restbereich der Anzeigevorrichtung weist das Abdeckelement 3 hier eine Materialdicke von 1,5 mm und eine Transparenz von ca. 25 % auf.

Die Flüssigkristallanzeige 4 weist hier eine Leuchtdichte von 900 cd/m² auf, wodurch auf der Vorderseite des Abdeckelements 3 eine Leuchtdichte von 450 cd/m² erreicht werden, welches ausreicht damit ein Benutzer die Flüssigkristallanzeige 4 ablesen kann.

Das Abdeckelement 3 weist auf seiner Rückseite einen Übergangsbereich 6 zwischen den Bereichen unterschiedlicher Materialdicke bzw. Transparenz auf. Dieser Übergangsbereich 6 weist eine gewisse Erstreckung parallel zu der Haupterstreckungsebene des Abdeckelements 3 auf. Insbesondere ist die Erstreckung ungleich Null. Hier ist der Übergangsbereich 6 linear vorgesehen, das heißt, die Materialdicke steigt in der Zeichnung von links nach rechts konstant an. An der Grenze zwischen dem Übergangsbereich 6 und dem Bereich hoher bzw. niedriger Transparenz entsteht somit ein scharfer Übergang, beispielsweise in Form einer Ecke.

Hier weist das Abdeckelement 3 auf seiner Vorderseite eine Antireflexionsbeschichtung 5, beispielsweise in Form einer Antireflexionsfolie, auf. Dadurch werden störende Lichtreflexionen vermieden und der Benutzer kann die erfindungsgemäße Anzeigevorrichtung gut ablesen. Weiterhin weist das Abdeckelement 3 hier auch auf seiner Rückseite im Übergangsbereich 6 eine Antireflexionsbeschichtung 5' auf. Dadurch werden störende Lichtreflexionen im Übergangsbereich vermieden.

Gemäß der dargestellten Ausführungsform weist die Flüssigkristallanzeige 4 einen Rahmen auf und der Übergangsbereich 6 ist über dem Rahmen vorgesehen. Der Übergangsbereich 6 weist hier eine vergleichsweise hohe Steigung auf, so dass die Erstreckung des Übergangsbereichs 6 gering ist und der Übergangsbereich 6 somit vollständig über der Flüssigkristallanzeige 4 vorgesehen ist.

In **Figur 2** ist eine weitere Ausführungsform der erfindungsgemäßen Anzeigevorrichtung dargestellt. Die dargestellte Ausführungsform entspricht im Wesentlichen der im Zusammenhang mit **Figur 1** beschriebenen Ausführungsform. Daher sei auf die obigen Ausführungen verwiesen.

Hier ist der Übergangsbereich 6 jedoch kontinuierlich ausgebildet, d.h. die Materialdicke steigt kontinuierlich in der Zeichnung von links nach rechts an. Durch den kontinuierlichen Übergang zwischen den Bereichen werden vorteilhafterweise Eckreflexionen vermieden.

Dadurch, dass der Übergangsbereich 6 kontinuierlich ausgebildet ist, weist der Übergangsbereich 6 gemäß der dargestellten Ausführungsform eine größere Erstreckung parallel zu der Haupterstreckungsrichtung des Abdeckelements 3 auf als gemäß der in **Figur 1** dargestellten Ausführungsform.

### Bezugszeichenliste

- 1: Erstes Anzeigesegment
- 2: Zweites Anzeigesegment
- 3: Abdeckelement
- 4: Anzeigevorrichtung
- 5, 5': Antireflexionsbeschichtung
- 6: Übergansbereich

- L₁: Helligkeit Anzeigeeinrichtung
- L₂: Helligkeit nach Abdeckelement

## Patentansprüche

1. Anzeigevorrichtung (4) mit einem ersten Anzeigesegment (1) und einem zweiten Anzeigesegment (2), wobei das erste Anzeigesegment (1) ein wenigstens teilweise transparentes Abdeckelement (3) mit einer Haupterstreckungsebene und einer Vorderseite und einer Rückseite umfasst und wobei das zweite Anzeigesegment (2) wenigstens eine Anzeigeeinrichtung umfasst, wobei die Anzeigeeinrichtung auf der Rückseite des Abdeckelements angeordnet ist und wobei das Abdeckelement (3) im Bereich der Anzeigeeinrichtung eine höhere Transparenz aufweist als in wenigstens einem anderen Bereich, wobei das Abdeckelement (3) einen Übergangsbereich (6) zwischen dem Bereich mit niedriger Transparenz zu dem Bereich mit höherer Transparenz aufweist, wobei der Übergangsbereich (6) eine Erstreckung parallel zu der Haupterstreckungsebene des Abdeckelements (3) aufweist, **dadurch gekennzeichnet, dass** die Transparenz des Abdeckelements im Bereich der Anzeigeeinrichtung 40 % bis 60 %, insbesondere 50 %, und in dem wenigstens einen anderen Bereich 10 % bis 40 %, besonders bevorzugt 20 % bis 30 %, insbesondere 25 % beträgt.

2. Anzeigevorrichtung (4) nach Anspruch 1, **dadurch gekennzeichnet, dass** das Abdeckelement in dem Bereich mit hoher Transparenz eine niedrigere Materialdicke aufweist als in dem Bereich mit niedriger Transparenz.

3. Anzeigevorrichtung (4) nach einem der voranstehenden Ansprüche, **dadurch gekennzeichnet, dass** die Materialdicke in dem Bereich mit niedriger Transparenz 0,5 mm bis 1,0 mm, besonders bevorzugt 0,7 mm bis 0,8 mm, insbesondere 0,75 mm beträgt.

4. Anzeigevorrichtung (4) nach einem der voranstehenden Ansprüche, **dadurch gekennzeichnet, dass** der zweite Anzeigesegment wenigstens ein Anzeigeelement, insbesondere Symbole und/oder Zeigerinstrumente aufweist.

5. Anzeigevorrichtung (4) nach einem der voranstehenden Ansprüche, **dadurch gekennzeichnet, dass** das erste Anzeigesegment auf der Vorderseite des Abdeckelements wenigstens teilweise eine Antireflexionsbeschichtung aufweist.

6. Anzeigevorrichtung (4) nach einem der voranstehenden Ansprüche, **dadurch gekennzeichnet, dass** das erste und/oder zweite Anzeigesegment auf der Rückseite des Abdeckelements wenigstens in dem Übergangsbereich eine Antireflexionsbeschichtung aufweist.

7. Anzeigevorrichtung (4) nach einem der voranstehenden Ansprüche, **dadurch gekennzeichnet, dass** die Anzeigeeinrichtung ein Flüssigkristalldisplay ist.

8. Anzeigevorrichtung (4) nach Anspruch 7, **dadurch gekennzeichnet, dass** die Anzeigeeinrichtung im eingeschalteten Zustand eine derartige Leuchtdichte aufweist, dass auf der Vorderseite des Abdeckelements die Leuchtdichte wenigstens 400 cd/m² oder wenigstens 450 cd/m², ganz besonders bevorzugt wenigstens 700 cd/m², 800 cd/m², 900 cd/m², 1000 cd/m² oder bis zu 1600 cd/m² beträgt.

9. Kombiinstrument eines Kraftfahrzeuges aufweisend eine Anzeigevorrichtung (4) gemäß einem der voranstehenden Ansprüche.

## Claims

1. Display device (4) having a first display segment (1) and a second display segment (2), wherein the first display segment (1) comprises an at least partly transparent cover element (3) that has a main plane of extent and a front side and a rear side, and wherein the second display segment (2) comprises at least one display unit, wherein the display unit is arranged on the rear side of the cover element, and wherein the cover element (3) has a higher transparency in the region of the display unit than in at least one other region, wherein the cover element (3) has a transitional region (6) between the region of low transparency and the region of higher transparency, wherein the transitional region (6) has an extent parallel to the main plane of extent of the cover element (3), **characterized in that** the transparency of the cover element is 40% to 60%, in particular 50%, in the region of the display unit and preferably 10% to 40%, particularly preferably 20% to 30%, in particular 25%, in the at least one other region.

2. Display device (4) according to Claim 1, **characterized in that** the cover element has a lower material thickness in the region of high transparency than in the region of low transparency.

3. Display device (4) according to one of the preceding claims, **characterized in that** the material thickness is 0.5 mm to 1.0 mm, particularly preferably 0.7 mm to 0.8 mm, in particular 0.75 mm in the region of low transparency.

4. Display device (4) according to one of the preceding claims, **characterized in that** the second display segment has at least one display element, in particular symbols and/or pointer-type instruments.

5. Display device (4) according to one of the preceding claims, **characterized in that** the first display segment at least partly has an antireflection coating on the front side of the cover element.

6. Display device (4) according to one of the preceding claims, **characterized in that** the first and/or second display segment has/have an antireflection coating on the rear side of the cover element, at least in the transitional region.

7. Display device (4) according to one of the preceding claims, **characterized in that** the display unit is a liquid crystal display.

8. Display device (4) according to Claim 7, **characterized in that** the display unit has a luminance, when switched on, such that the luminance is at least 400 cd/m² or at least 450 cd/m², very particularly preferably at least 700 cd/m², 800 cd/m², 900 cd/m², 1000 cd/m² or up to 1600 cd/m² on the front side of the cover element.

9. Instrument cluster of a motor vehicle having a display device (4) according to one of the preceding claims.

## Revendications

1. Arrangement d'affichage (4) comprenant un premier segment d'affichage (1) et un deuxième segment d'affichage (2), le premier segment d'affichage (1) comportant un élément de recouvrement (3) au moins partiellement transparent ayant un plan d'extension principal ainsi qu'un côté avant et un côté arrière, et le deuxième segment d'affichage (2) comportant au moins un dispositif d'affichage et le dispositif d'affichage étant disposé sur le côté arrière de l'élément de recouvrement et l'élément de recouvrement (3) possédant, dans la zone du dispositif d'affichage, une transparence plus élevée que dans au moins une autre zone, l'élément de recouvrement (3) possédant une zone de transition (6) entre la zone ayant la transparence plus faible vers la zone ayant la transparence plus élevée, la zone de transition (6) possédant une extension parallèle au plan d'extension principal de l'élément de recouvrement (3), **caractérisé en ce que** la transparence de l'élément de recouvrement dans la zone du dispositif d'affichage est de 40 % à 60 %, notamment égale à 50 %, et dans l'au moins une autre zone de 10 % à 40 %, notamment de préférence de 20 % à 30 %, notamment égale à 25 %.

2. Arrangement d'affichage (4) selon la revendication 1, **caractérisé en ce que** l'élément de recouvrement, dans la zone à forte transparence, a une épaisseur de matériau plus faible que dans la zone à faible transparence.

3. Arrangement d'affichage (4) selon l'une des revendications précédentes, **caractérisé en ce que** l'épaisseur de matériau dans la zone à faible transparence est de 0,5 mm à 1,0 mm, notamment de préférence de 0,7 mm à 0,8 mm, notamment égale à 0,75 mm.

4. Arrangement d'affichage (4) selon l'une des revendications précédentes, **caractérisé en ce que** le deuxième segment d'affichage possède au moins un élément d'affichage, notamment des symboles et/ou des instruments à aiguille.

5. Arrangement d'affichage (4) selon l'une des revendications précédentes, **caractérisé en ce que** le premier segment d'affichage possède au moins partiellement un revêtement antireflet sur le côté avant de l'élément de recouvrement.

6. Arrangement d'affichage (4) selon l'une des revendications précédentes, **caractérisé en ce que** le premier et/ou le deuxième segment d'affichage possèdent un revêtement antireflet sur le côté arrière de l'élément de recouvrement, au moins dans la zone de transition.

7. Arrangement d'affichage (4) selon l'une des revendications précédentes, **caractérisé en ce que** le dispositif d'affichage est un afficheur à cristaux liquides.

8. Arrangement d'affichage (4) selon la revendication 7, **caractérisé en ce que** le dispositif d'affichage, à l'état allumé, présente une densité lumineuse telle que sur le côté avant de l'élément de recouvrement, la densité lumineuse est égale à au moins 400 cd/m² ou au moins 45 cd/m², tout particulièrement préférablement 700 cd/m², 800 cd/m², 900 cd/m², 1000 cd/m² ou jusqu'à 1600 cd/m².

9. Instrument combiné d'un véhicule automobile possédant un arrangement d'affichage (4) selon l'une des revendications précédentes.
